# EUROPEAN PATENT SPECIFICATION

(11) **EP 1 353 108 B1**
(45) Date of publication and mention of the grant of the patent: **29.07.2009**
(21) Application number: 01901454.7
(22) Date of filing: 19.01.2001
(51) Int. Cl.: F16L 37/47, F16L 37/23

(54) **SOCKET FOR PIPE JOINT**
MUFFE FÜR ROHRVERBINDUNG
RACCORD POUR JOINT DE TUYAUX

(43) Date of publication of application: 15.10.2003
(73) Proprietor: NITTO KOHKI CO., LTD., Oohta-ku, Tokyo 146-8555 (JP)
(72) Inventor: KOUDA, Toru, Tokyo 146-8555 (JP)
(74) Representative: Fuhlendorf, Jörn
(86) International application number: PCT/JP2001/000335
(87) International publication number: WO 2002/057681

(56) References cited:
- EP-A1- 0 234 086
- EP-A1- 0 441 727
- EP-A2- 0 908 660
- JP-A- 1 003 393
- JP-A- 1 006 593
- JP-A- 4 211 793
- JP-A- 11 108 279
- JP-A- 62 180 193
- US-A- 3 423 063

## Description

### Technical Field

The present invention relates to a pipe coupling socket which uses a ball valve as a valving element and to or from which a plug can be attached or detached speedily and easily, and more particularly, to a pipe coupling socket suited for the connection between an air tool or the like and piping.

### Background Art

Conventional pipe coupling sockets of this type are described in Jpn. Pat. Appln. KOKAI Publication No. 11-108279 (EP-A2-0 908 660) and U.S. Pat. No. 3,423,063, for example.

If a plug is inserted into a plug inlet of the pipe coupling socket described in Jpn. Pat. Appln. KOKAI Publication No. 11-108279, in connecting the plug, a plug connecting sleeve and a valve control sleeve, having so far been retreated, advance. Thereupon, the plug is locked by means of the plug connecting sleeve, and a valve is opened by means of the valve control sleeve. In disconnecting the valve, the valve control sleeve is retreated, the valve is closed in the middle of the retreat, and a fluid in the plug is discharged to the outside. If the valve control sleeve is retreated further, the plug connecting sleeve retreats to unlock the plug, whereupon the plug can be disconnected from the pipe coupling socket.

If a plug is inserted into a plug inlet of the pipe coupling socket described in U.S. Pat. No. 3,423,063, in connecting the plug, on the other hand, a plug connecting sleeve, having so far been retreated, advances to lock the plug. If a valve control sleeve is advanced thereafter, the valve is opened. In disconnecting the plug, the valve is closed by retreating the valve control sleeve, and a fluid in the plug is discharged to the outside. If the plug connecting sleeve is retreated thereafter, the plug is unlocked, whereupon the plug can be disconnected from the pipe coupling socket.

Further, either of the pipe coupling sockets described in Jpn. Pat. Appln. KOKAI Publication No. 11-108279 and U.S. Pat. No. 3,423,063 is designed so that the valve control sleeve cannot be advanced, that is, the valve cannot be opened, unless the plug control sleeve is advanced. Means for holding the plug control sleeve in the retreated position shares lock balls with lock means for locking the plug. When the plug is not connected, the plug control sleeve engages the lock balls on the centrifugal side and is prevented from advancing. As the lock balls move to the centripetal direction when the plug is connected, the engagement is canceled, whereupon the plug control sleeve advances.

These pipe coupling sockets may be used for the connection of air piping and an air tool. In moving the air tool to another neighboring job site, regarding the pipe coupling socket described in Jpn. Pat. Appln. KOKAI Publication No. 11-108279, the plug connecting sleeve also retreats to cause the plug to be disconnected inevitably if the valve control sleeve is retreated to close the valve. Thus, the pipe coupling socket and the plug cannot be connected with the valve closed. Therefore, the plug may be either kept connected or disconnected as the tool is moved. In the former case, the valve is open, so the air tool may be accidentally actuated and cause injury while the air tool is being moved. Although the latter case is free from this problem, it is subject to a problem that the plug must be connected again at a destination, which is troublesome.

Since the valve control sleeve that is advanced to open the valve is allowed to retreat, moreover, the valve control sleeve may possibly run against some surrounding obstacles and retreat during the operation of the air tool, thereby causing the valve and the plug to be closed and disconnected, respectively.

In the case of the pipe coupling socket described in U.S. Pat. No. 3,423,063, furthermore, the pipe coupling socket and the plug can be connected in a manner such that only the valve control sleeve is retreated to close the valve. Since the valve control sleeve can advance, however, there is a problem that the valve control sleeve may possibly run against some surrounding obstacles and advance as the air tool moves, thereby causing the valve to open.

Further, either of the pipe coupling sockets described in Jpn. Pat. Appln. KOKAI Publication No. 11-108279 and U.S. Pat. No. 3,423,063 shares the same lock balls with the lock means for locking the plug as means for holding the plug control sleeve in the retreated position. Therefore, the lock balls may possibly move to the centripetal direction with the plug connected only partially to a pipe coupling. In this case, the plug control sleeve inevitably advances despite the partial connection of the plug, thus the valve control sleeve is unavoidably allowed to advance.

### Disclosure of Invention

An object of the present invention is to provide a pipe coupling socket provided with lock means that prevents the advance and retreat of a valve control sleeve and a plug connecting sleeve, whereby safety is improved.

Another object of the present invention is to provide a pipe coupling socket in which the advance of a plug connecting sleeve is prevented so that a valve cannot be opened by means of a valve control sleeve if valve connection is partial, whereby safety is improved.

Another object of the present invention is to provide a pipe coupling socket in which seal valve-seats are prevented from being pressed to the ball valve under a fluid pressure. This ensures the durability of the seal valve-seats and the perfection of sealing.

In order to achieve the above objects, the pipe coupling socket has got the features according to claim 1.

According to this configuration, the first lock means can prevent the valve control sleeve from advancing when the plug connecting sleeve is situated in the retreated position, the second lock means can prevent the retreat of the plug connecting sleeve and the advance of the valve control sleeve when the plug connecting sleeve and the valve control sleeve are situated in the advanced position and the retreated position, respectively, and the third lock means can prevent the retreat of the plug connecting sleeve and the valve control sleeve when the plug connecting sleeve and the valve control sleeve are situated in their respective advanced positions.

Preferably, the plug connecting sleeve is prevented from rotating in the circumferential direction and allowed to advance when in the retreated position, and is allowed to rotate in the circumferential direction to be prevented from retreating when in the advanced position.

The inner peripheral surface of the valve control sleeve has, on the distal end side thereof, a convex portion which extends in the circumferential direction and has first retaining step portions, the convex portion is formed having moving grooves in positions corresponding to the fitting recesses in the outer peripheral surface of the socket body, depending on the distance covered by the movement of the plug connecting sleeve, the first lock balls in the centrifugal side being movable in the moving grooves, the moving grooves having, at the bottom thereof, the second retaining step portions and the effect of locking by the first, second, and third lock means is removed when the first lock balls are fitted in the fitting recesses in the outer peripheral surface of the socket body and situated on the centripetal side.

According to this configuration, the second lock means, which prevents the retreat of the plug connecting sleeve and the advance of the valve control sleeve when the plug connecting sleeve and the valve control sleeve are situated in the advanced position and the retreated position, respectively, and the third lock means, which prevents the retreat of the plug connecting sleeve and the valve control sleeve when the plug connecting sleeve and the valve control sleeve are situated in their respective advanced positions, can be manipulated by simple operation such that the plug connecting sleeve is rotated in the circumferential direction.

Preferably, the distal end portion of the socket body is fitted with a plurality of second lock balls which are arranged in the circumferential direction behind the locking element for movement in the centripetal and centrifugal directions, the socket body is fitted with a first collar for movement, the first collar in an advanced position supporting and situating the second lock balls on the centrifugal side in a manner such that a part of each second lock ball projects from the outer peripheral surface of the socket body and retreating to release the second lock balls from the support, thereby allowing the second lock balls to sink into the socket body, the first collar being urged in the advancing direction by means of a spring so that the first collar retreats as a plug is inserted therein; the plug connecting sleeve has, on the distal end side of the inner peripheral surface thereof, a plug unlocking recess which extends in the circumferential direction and allows the locking element to move to the centrifugal direction, the plug unlocking recess being followed in the circumferential direction by a taper step portion, which presses and moves the locking element to the centripetal direction, and a plug lock projection, which holds down moved to the centripetal direction, the plug lock projection being followed in the circumferential direction by a second lock ball engaging groove in which the second lock balls are fitted; the plug unlocking recess is situated in the position of the locking element and is allowed to move to the centrifugal direction of the locking element when the second lock balls are on the centrifugal side with the plug connecting sleeve in the retreated position, the second lock balls engaging the second lock ball engaging groove, thereby preventing the advance of the plug connecting sleeve; and the locking element moved to the centrifugal direction in the process of plug insertion engages a step portion at the bottom of the plug unlocking recess of the plug connecting sleeve so that the plug connecting sleeve can advance when the first collar retreats to allow the second lock balls to move to the centripetal direction and be disengaged from the second lock ball engaging groove as the plug is inserted further.

In connecting the plug, according to this configuration, the second lock balls are disengaged from the second lock ball engaging groove after the locking element first engages the taper step portion, the plug connecting sleeve is allowed to advance after the locking element engages the plug. In disconnecting the plug, moreover, the locking element first engages the taper step portion to prevent the advance of the plug connecting sleeve as the plug connecting sleeve is retreated to draw out the plug. Then, the second lock balls engage the second lock ball engaging groove, and thereafter, the locking element is disengaged from the taper step portion. Therefore, there is no possibility of the plug connecting sleeve advancing with the plug not connected owing to partial connection of the plug or the like. Thus, the valve control sleeve cannot advance either, so that the ball valve cannot be opened with the plug not connected.

Preferably, moreover, the respective openings of the piping passage of the piping junction and the plug inlet, which open on the valve chamber side of the socket body, are provided individually with annular rubber seal valve-seats which coaxially face each other across the through passage of the ball valve in an open position and are elastically pressed to the outer peripheral wall of the ball valve, the openings being further provided individually with stoppers which prevent the annular rubber seal valve-seats from being pressed to the ball valve under an internal fluid pressure.

If the annular rubber seal valve-seats, which are elastically pressed to the outer peripheral wall of the ball valve, are subjected to the internal fluid pressure, according to this configuration, the stoppers prevent them from being deformed and from being pressed to the ball valve. Thus, the durability of the annular rubber seal valve-seats and the perfection of sealing can be ensured.

Other objects, features, and advantages of the present invention will be more apparent from the ensuing detailed description taken in connection with the accompanying drawings.

### Brief Description of Drawings

FIG. 1 is a longitudinal sectional view of a first embodiment of a pipe coupling socket according to the present invention, taken across locking elements, first lock balls, and second lock balls;
FIG. 2 is a longitudinal sectional view of a principal part showing a process of connecting a plug to the pipe coupling socket shown in FIG. 1;
FIG. 3 is a longitudinal sectional view of the principal part showing a process of connecting the plug to the pipe coupling socket shown in FIG. 1;
FIG. 4 is a longitudinal sectional view of the principal part showing a process of connecting the plug to the pipe coupling socket shown in FIG. 1;
FIG. 5 is a longitudinal sectional view of a principal part showing a state in which a ball valve is opened after the plug is connected to the pipe coupling socket shown in FIG. 1;
FIG. 6 is a longitudinal sectional view of the principal part showing a state in which a valve control sleeve and a plug connecting sleeve are locked with the plug connected to the pipe coupling socket shown in FIG. 1 and with the ball valve open;
FIG. 7 is a longitudinal sectional view of the principal part showing a state in which the valve control sleeve and the plug connecting sleeve are locked with the plug connected to the pipe coupling socket shown in FIG. 1 and with the ball valve closed;
FIG. 8 is a plan view showing a socket body of the pipe coupling socket shown in FIG. 1;
FIG. 9 is a side view showing the socket body of the pipe coupling socket shown in FIG. 1;
FIG. 10 is a development illustrating the socket body, valve control sleeve, and plug connecting sleeve, based on line A-A representing the positional relations between the pipe coupling socket shown in FIG. 1, cut positions of FIGS. 1 to 5, showing the process in which the plug is inserted into the pipe coupling socket to open the ball valve, locking elements, first lock balls, and second lock balls ;
FIG. 11 is a development illustrating the socket body, valve control sleeve, and plug connecting sleeve, based on line B-B representing the positional relations between the cut positions of FIGS. 6 and 7, showing the state in which the valve control sleeve and the plug connecting sleeve of the pipe coupling socket shown in FIG. 1 are locked, locking elements, first lock balls, and second lock balls;
FIG. 12 is a longitudinal sectional view of a second embodiment of the pipe coupling socket according to the present invention, taken across locking elements, first lock balls, and second lock balls;
FIG. 13 is a longitudinal sectional view of a principal part showing a state in which a valve control sleeve and a plug connecting sleeve are locked with the plug connected to the pipe coupling socket shown in FIG. 12 and with a ball valve open;
FIG. 14 is a longitudinal sectional view of the principal part in the same state of FIG. 13, taken in a position off first lock balls;
FIG. 15 is a longitudinal sectional view of the principal part showing a state in which the valve control sleeve and the plug connecting sleeve are locked with the plug connected to the pipe coupling socket shown in FIG. 12 and with the ball valve closed;
FIG. 16 is a longitudinal sectional view of the principal part in the same state of FIG. 15, taken in a position off the first lock balls;
FIG. 17 is a plan view showing a socket body of the pipe coupling socket shown in FIG. 12;
FIG. 18 is a side view showing the socket body of the pipe coupling socket shown in FIG. 12;
FIG. 19 is a development illustrating the socket body, valve control sleeve, and plug connecting sleeve, based on line C-C representing the positional relations between the cut position of FIG. 12, locking elements, first lock balls, and second lock balls;
FIG. 20 is a development illustrating the socket body, valve control sleeve, and plug connecting sleeve, based on line D-D representing the positional relations between the cut positions of FIGS. 13 and 15, showing the state in which the valve control sleeve and the plug connecting sleeve of the pipe coupling socket shown in FIG. 12 are locked, locking elements, first lock balls, and second lock balls; and
FIG. 21 is a development illustrating the socket body, valve control sleeve, and plug connecting sleeve, based on line E-E representing the positional relations between the cut positions of FIGS. 14 and 16, showing the state in which the valve control sleeve and the plug connecting sleeve of the pipe coupling socket shown in FIG. 12 are locked, locking elements, first lock balls, and second lock balls.

### Best Mode for Carrying Out the Invention

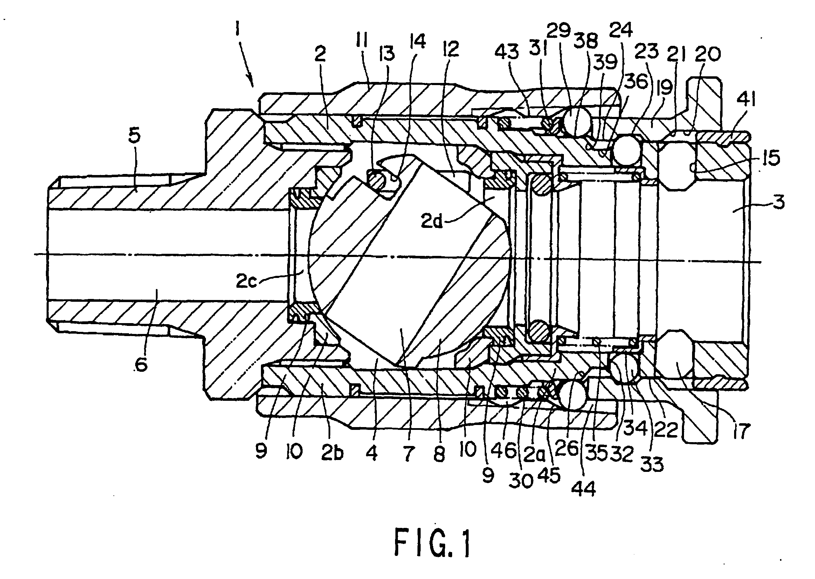

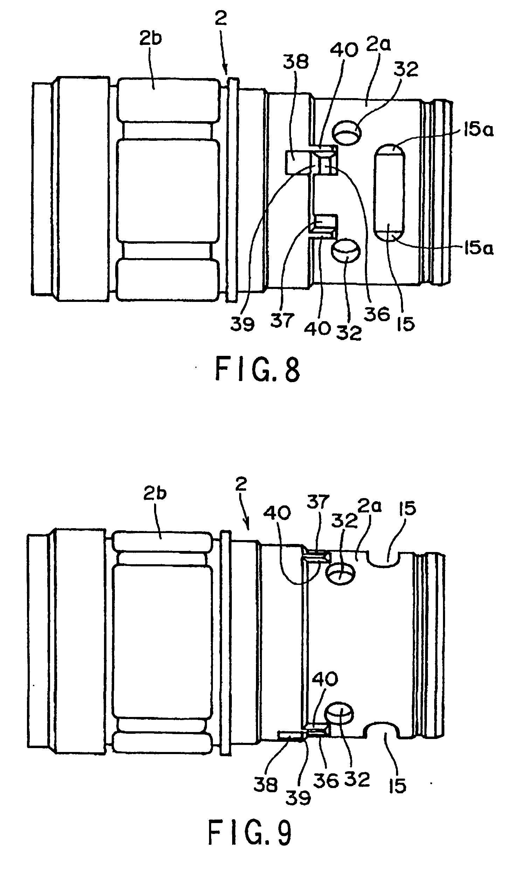

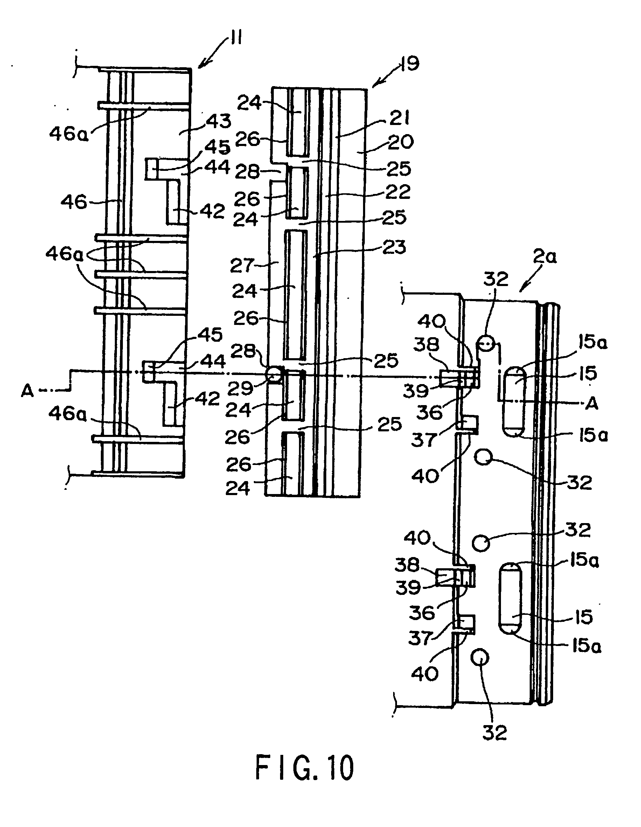

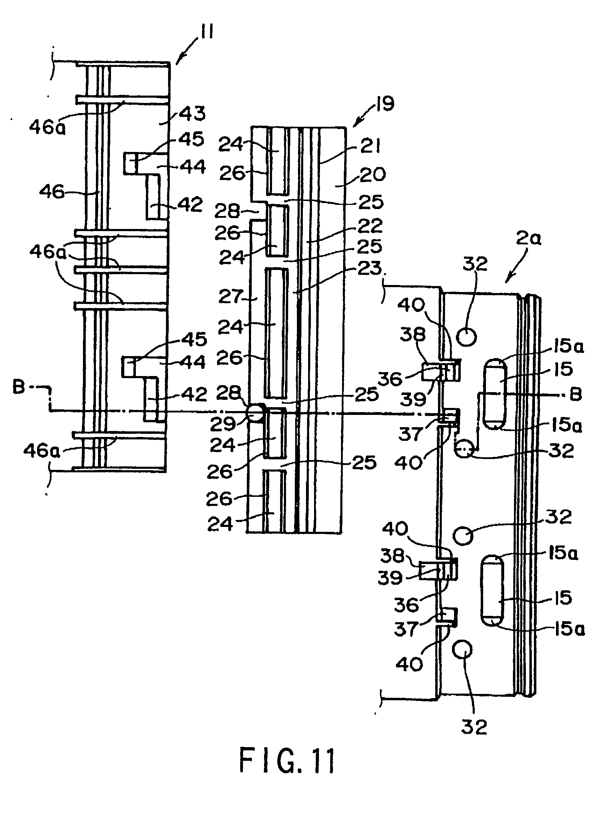

A first embodiment of a pipe coupling socket according to the present invention will first be described with reference to FIGS. 1 to 11.

A pipe coupling socket 1 of this embodiment comprises a socket body 2, which has a small-outside-diameter cylinder portion 2a on its distal end side and a large-outside-diameter cylinder portion 2b on its rear end side. The socket body 2 is designed so that a plug inlet 3 and a valve chamber 4 are defined in the small-outside-diameter cylinder portion 2a and the large-outside-diameter cylinder portion 2b, respectively. A piping junction 5 is screwed into the rear end portion of the large-outside-diameter cylinder portion 2b. A piping passage 6 of the piping junction 5, the valve chamber 4, and the plug inlet 3 communicate with one another.

A ball valve 8 having a through passage 7 is rotatably supported in the valve chamber 4 by means of a shaft (not shown). The ball valve 8 is rotated to align the through passage 7 with openings 2c and 2d of the piping passage 6 and the plug inlet 3 that open to the valve chamber 4. As this is done, the ball valve 8 is opened, and the respective openings 2c and 2d of the piping passage 6 and the plug inlet 3 are blocked by the outer peripheral wall of the ball valve 8, whereupon the ball valve 8 is closed.

The opening 2c of the piping passage 6 of the piping junction 5 and the opening 2d of the plug inlet 3 that open to the valve chamber 4 are provided individually with seal valve-seats 9 in the form of rubber rings that coaxially face each other with the through passage 7 of the ball valve 8 in its open position between them and are elastically pressed to the outer peripheral wall of the ball valve 8. Further, the openings 2c and 2d are provided individually with ring-shaped stoppers 10 that prevent the annular rubber seal valve-seats 9 from being pressed to the ball valve 8 under an internal fluid pressure.

The operation to rotate the ball valve 8 is carried out by means of a valve control sleeve 11 that is fitted on the outer periphery of the large-outside-diameter cylinder portion 2b of the socket body 2 for movement in the axial direction only. More specifically, the large-outside-diameter cylinder portion 2b of the socket body 2 is provided with two axially elongate slots 12, which are opposed to each other and open into the valve chamber 4. A control rod 13 penetrates the two slots 12 for axial movement in the slots 12. The opposite ends of the control rod 13 are fixed to the valve control sleeve 11. As the valve control sleeve 11 moves forward or backward, the control rod 13 moves in the same direction in the slots 12.

The ball valve 8 is formed having an engaging groove 14 in which the control rod 13 is fitted. As the control rod 13 moves with the forward or backward movement of the valve control sleeve 11, the ball valve 8 rotates to be opened or closed.

Further, circumferential elongate slots 15 are formed in the distal end portion of the small-outside-diameter cylinder portion 2a of the socket body 2. Locking elements 17 that engage an engaging groove 18 in the outer periphery of a plug 16, thereby locking the plug 16, are loosely fitted in the slots 15. The slots 15 (two in number in this embodiment) are arranged at equal spaces in the circumferential direction of the small-outside-diameter cylinder portion 2a. Retaining step portions 15a are formed individually on the longitudinally opposite sides of each slot 15. The retaining step portions 15a individually engage the locking elements 17 so that a part of each locking element 17 can be kept projecting in the inner surface of the small-outside-diameter cylinder portion 2a. The dimension of each locking element 17 in its centripetal and centrifugal directions is a little greater than the wall thickness of the small-outside-diameter cylinder portion 2a.

The locking elements 17 move to the centrifugal direction when they are pressed by a taper surface 16a that is formed on the outer peripheral surface of the plug 16 on its distal end side. When the engaging groove 18 on the outer periphery of the plug 16 is aligned with the locking elements 17, the locking elements 17 move to the centripetal direction so that they can be fitted in the engaging groove 18.

A plug connecting sleeve 19 is fitted on the outer periphery of the small-outside-diameter cylinder portion 2a of the socket body 2 so as to be movable back and forth in the axial direction and rotatable in the circumferential direction. As the sleeve 19 advances, it presses and moves the locking elements 17 to the centripetal direction, thereby locking the socket body 2 and the plug 16. As the sleeve 19 retreats, it releases the locking elements 17 from the press so that the locking elements 17 can move to the centrifugal direction, thereby unlocking the socket body 2 and the plug 16.

A plug unlocking recess 20 is formed extending in the circumferential direction on the distal end side of the inner peripheral surface of the plug connecting sleeve 19. It allows the locking elements 17 to move to the centrifugal direction. Behind the plug unlocking recess 20, a taper step portion 21 and a plug lock projection 22 are arranged in the circumferential direction. The taper step portion 21 moves to the centrifugal direction and engages the locking elements 17 that partially project from the outer periphery of the small-outside-diameter cylinder portion 2a, thereby pressing and moving the locking elements 17 to the centripetal direction. The plug lock projection 22 holds down the locking elements 17 that are moved to the centripetal direction.

In the inner peripheral surface of the plug connecting sleeve 19, moreover, a second lock ball engaging groove 23 is formed extending in the circumferential direction behind the plug lock projection 22. A second lock ball (mentioned later) in the small-outside-diameter cylinder portion 2a of the socket body 2 is fitted in the groove 23. Further, projections 24 that are arranged in the circumferential direction behind the second lock ball engaging groove 23 are formed having engaging grooves 25 in positions corresponding to engaging projections (mentioned later) on the outer periphery of the small-outside-diameter cylinder portion 2a. The engaging projections can be fitted in the engaging grooves 25 for axial movement. Furthermore, the inner peripheral surface of the plug connecting sleeve 19 on its rear end side is formed having a recess 27 that is flush with the respective groove bases of the engaging grooves 25. A plurality of notches 28 (two in number in this embodiment) are arranged at given spaces in the circumferential direction at the rear end of the plug connecting sleeve 19 in which the recess 27 is formed. First lock balls 29 that have a diameter greater than the wall thickness of the plug connecting sleeve 19 are fitted individually in the notches 28 for movement in the centripetal and centrifugal directions. The first lock balls 29 are urged to get into the notches 28 via a second collar 31 by means of a spring 30 that is interposed between the rear end of the plug connecting sleeve 19 and the socket body 2. Thus, the first lock balls 29 are prevented from slipping out of the respective openings of the notches 28 to the rear end side of the plug connecting sleeve 19. The plug connecting sleeve 19 is urged to advance by means of the spring 30 with the aid of the first lock balls 29.

The small-outside-diameter cylinder portion 2a of the socket body 2 on which the plug connecting sleeve 19 is fitted is formed having fitting holes 32, which are arranged in the circumferential direction and situated behind the slots 15 in which the locking elements 17 are fitted. Second lock balls 33 are fitted individually in the fitting holes 32 for movement in the centripetal and centrifugal directions. The fitting holes 32 (four in number in this embodiment) are arranged at equal spaces in the circumferential direction of the small-outside-diameter cylinder portion 2a. On the inner peripheral side of the small-outside-diameter cylinder portion 2a, each fitting hole 32 is tapered toward the inner periphery of the small-outside-diameter cylinder portion 2a so that a part of each second lock ball 33 can be kept projecting from the inner surface. The diameter of each second lock ball 33 is a little greater than the wall thickness of the small-outside-diameter cylinder portion 2a.

The positions of the fitting holes 32 in which the second lock balls 33 are fitted are set so that they are aligned with the position of the second lock ball engaging groove 23 in the inner peripheral surface of the plug connecting sleeve 19 when the plug connecting sleeve 19 is in its retreated position. When the second lock balls 33 that are fitted individually in the fitting holes 32 are on the centrifugal side in this state, a part of each second lock ball 33 that projects from the outer periphery of the small-outside-diameter cylinder portion 2a engages the second lock ball engaging groove 23.

Further, a first collar 34 is movably fitted in the small-outside-diameter cylinder portion 2a. It advances to support and situate the second lock balls 33 on the centrifugal side or retreats to release the second lock balls 33 from the support, thereby allowing the second lock balls 33 to move to the centripetal direction. This first collar 34 is advanced by means of a spring 35 or retreated as the plug 16 is inserted therein.

Furthermore, fitting recesses 36 are formed corresponding to the first lock balls 29 on the outer peripheral surface of the small-outside-diameter cylinder portion 2a and arranged in the circumferential direction. They are deep enough to allow the first lock balls 29 in engagement with the notches 28 in the rear end of the plug connecting sleeve 19 in its advanced position to be fitted therein and move to the centripetal direction. When the plug connecting sleeve 19 advances so that the first lock balls 29 are fitted individually in the fitting recesses 36, the first lock balls 29 move to the centripetal direction and sink into the plug connecting sleeve 19. If the plug connecting sleeve 19 is rotated in the circumferential direction in this state, the first lock balls 29 get out of the fitting recesses 36, run on to the outer peripheral surface of the small-outside-diameter cylinder portion 2a, and move to the centrifugal direction. Thus, a part of each first lock ball 29 projects from the outer periphery of the plug connecting sleeve 19.

Further, retaining recesses 37 that are engaged by the first lock balls 29 are formed on the outer periphery of the small-outside-diameter cylinder portion 2a so as to be arranged in the same circumferential direction with the fitting recesses 36. The retaining recesses 37 have a depth such that the first lock balls 29 that are fitted therein still partially project from the outer periphery of the plug connecting sleeve 19.

The distal end of the small-outside-diameter cylinder portion 2a is provided with a ring-shaped stopper 41, which prevents the plug connecting sleeve 19 from slipping away and regulates its advanced position.

Further, engaging recesses 38 are formed behind the fitting recesses 36. The first lock balls 29 individually engage them when the plug connecting sleeve 19 is situated in its retreated position. Each engaging recess 38 and its corresponding fitting recess 36 axially range with each other with a taper step portion 39 between them.

Furthermore, engaging step portions 40 are formed individually adjacent to the fitting recesses 36 and the retaining recesses 37 on the outer periphery of the small-outside-diameter cylinder portion 2a. When the plug connecting sleeve 19 is in the retreated position, the step portions 40 engage the engaging grooves 25 in the projections 24, thereby preventing the plug connecting sleeve 19 from rotating in the circumferential direction and allowing it to move in the axial direction only. When the plug connecting sleeve 19 is in the advanced position, the step portions 40 are disengaged from the engaging grooves 25 and engage step portions 26 behind the projections 24, thereby preventing the plug connecting sleeve 19 from retreating and allowing it to rotate in the circumferential direction.

The valve control sleeve 11 has a convex portion 43 that is located on its distal end side and extends in the circumferential direction. The convex portion 43 has tapered first engaging step portions 42, which engage the first lock balls 29 when the first lock balls 29 are disengaged from the fitting recesses 36 and situated on the centrifugal side with the plug connecting sleeve 19 in the advanced position.

The convex portion 43 is formed having slots 44 that are situated corresponding to the fitting recesses 36 and engaging recesses 38 in the outer peripheral surface of small-outside-diameter cylinder portion 2a. The first lock balls 29 can move in the slots 44. The slots 44 are formed according to the extent of advance and retreat of the plug connecting sleeve 19.

Each slot 44 has a second retaining step portion 45 at the bottom of it. Each corresponding first lock ball 29 engages the second retaining step portion 45 when the plug connecting sleeve 19 is in the retreated position.

Further, the convex portion 43 is formed having a first lock ball engaging groove 46 behind the slots 44. The first lock balls 29 engage the groove 46 when the first lock balls 29 are disengaged from the fitting recesses 36 and situated on the centrifugal side with the plug connecting sleeve 19 in the advanced position.

The first lock balls 29 on the centrifugal side and the second retaining step portions 45 at the bottom of the slots 44 of the valve control sleeve 11 constitute first lock means that prevents the advance of the valve control sleeve 11 when the plug connecting sleeve 19 is in the retreated position. The first lock balls 29 on the centrifugal side and the first retaining step portions 42 of the valve control sleeve 11 constitute second lock means that prevents the retreat of the plug connecting sleeve 19 and the advance of the valve control sleeve 11 when the plug connecting sleeve 19 and the valve control sleeve 11 are in their advanced and retreated positions, respectively. The first lock balls 29 on the centrifugal side and the first lock ball engaging groove 46 of the valve control sleeve 11 constitute third lock means that prevents the retreat of the plug connecting sleeve 19 and the valve control sleeve 11 when the plug connecting sleeve 19 and the valve control sleeve 11 are in their respective advanced positions.

Further, grooves 46a are formed extending to the distal end portion and communicating with the first lock ball engaging groove 46. They allow the fluid pressure on the side of the plug 16 to be discharged into the atmosphere when the ball valve 8 is closed.

Furthermore, the effect of locking by the first, second, and third lock means is removed when the first lock balls 29 are fitted in the fitting recesses 36 in the outer peripheral surface of the small-outside-diameter cylinder portion 2a and situated on the centripetal side.

The following is a description of operation for connecting the pipe coupling socket 1 and the plug 16.

In the pipe coupling socket 1 that is not connected with the plug 16, the second lock balls 33, which are supported by means of the advanced first collar 34, are situated on the centrifugal side, and engage the second lock ball engaging groove 23 of the plug connecting sleeve 19 in the retreated position. Thereupon, the plug connecting sleeve 19 is prevented from advancing. The second lock balls 29, which are in engagement with the notches 28 at the rear end of the plug connecting sleeve 19, engage the engaging recesses 38 in the outer peripheral surface of the small-outside-diameter cylinder portion 2a and partially project from the outer periphery of the plug connecting sleeve 19. The first lock balls 29 are situated in the slots 44 of the valve control sleeve 11 in the retreated position. Those parts of them which project from the outer periphery of the plug connecting sleeve 19 engage the second retaining step portions 45 at the bottom of the slots 44. Thus, the valve control sleeve 11 is prevented from advancing, and the ball valve 8 is in its closed state.

The engaging projections 40 that are formed on the outer periphery of the small-outside-diameter cylinder portion 2a engages the engaging grooves 25 in the inner periphery of the plug connecting sleeve 19, thereby preventing the plug connecting sleeve 19 from rotating (FIG. 1).

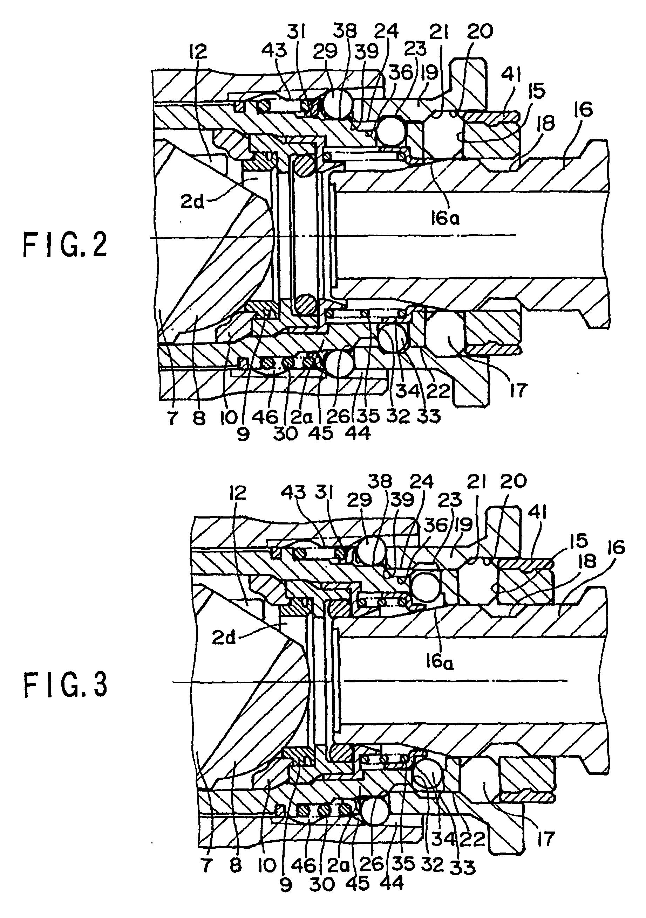

If the plug 16 is inserted into the plug inlet 3 in this state, the locking elements 17 that are fitted individually in the slots 15 of the small-outside-diameter cylinder portion 2a are first pressed in the centrifugal direction by the taper surface 16a that is formed on the outer peripheral surface of the plug 16, and move to the centrifugal direction. The locking elements 17 partially enter the plug unlocking recess 20 of the plug connecting sleeve 19 and engage the taper step portion 21 (FIG. 2).

If the plug 16 is further inserted, the first collar 34 is pressed by the taper surface 16a of the plug 16 and retreats, thereby releasing the second lock balls 33 on the centrifugal side from the support. Thereupon, the second lock balls 33 are disengaged from the second lock ball engaging groove 23 of the plug connecting sleeve 19. At this point in time, the locking elements 17 are in engagement with the taper step portion 21, so that the plug connecting sleeve 19 is prevented from advancing (FIG. 3).

If the plug 16 is further inserted so that the engaging groove 18 on the outer periphery of the plug 16 reaches the position of the locking elements 17, the locking elements 17 move to the centripetal direction and engage the engaging groove 18. Thereupon, the plug connecting sleeve 19, released from the engagement with the locking elements 17, is urged by the spring 30 to advance. The locking elements 17 that are in engagement with the engaging groove 18 are pressed by the plug lock projection 22 on the inner peripheral surface of the sleeve 19 and prevented from moving to the centrifugal direction. Thus, the pipe coupling socket 1 and the plug 16 are connected to each other.

In disconnecting the pipe coupling socket 1 and the plug 16 connected in this manner, the plug connecting sleeve 19 in the aforesaid state is retreated so that the locking elements 17 are situated on the side of the plug unlocking recess 20 and released from the press by the plug lock projection 22. In this state, the plug 16 is drawn out. As the plug 16 is drawn out in this manner, the locking elements 17 that are disengaged from the engaging groove 18 first move pressed to the centrifugal direction by the outer periphery of the plug 16, get into the plug unlocking recess 20 of the retreated plug connecting sleeve 19, and engage the taper step portion 21 (FIG. 3).

If the plug 16 is further drawn out, the first collar 34, having so far been retreated as the plug 16 is drawn out, is urged by the spring 35 to advance, thereby moving the second lock balls 33 on the centripetal side to the centrifugal direction. The second lock balls 33 moved to the centrifugal direction engage the second lock ball engaging groove 23 of the plug connecting sleeve 19 (FIG. 2).

If the plug 16 is further drawn out and disconnected from the pipe coupling socket 1, the locking elements 17 are disengaged from the taper step portion 21, and the plug connecting sleeve 19 is held in the retreated position and prevented from advancing by the second lock balls 33.

Thus, in connecting the plug 16, the second lock balls 33 are disengaged from the second lock ball engaging groove 23 after the locking elements 17 first engage the taper step portion 21. The plug connecting sleeve 19 can be advanced after the locking elements 17 engage the engaging groove 18 of the plug 16. In disconnecting the plug 16, on the other hand, the plug connecting sleeve 19 is retreated to draw out the plug 16. In this process, the locking elements 17 are first anchored to the taper step portion 21, thereby preventing the advance of the plug connecting sleeve 19, the second lock balls 33 then engage the second lock ball engaging groove 23, and the locking elements 17 are disengaged from the taper step portion 21 thereafter. Accordingly, there is no possibility of the plug connecting sleeve 19 advancing without the connection of the plug 16 owing to deficient connection of the plug 16 or the like. Without the connection of the plug 16, therefore, the valve control sleeve 11 cannot advance either, and the ball valve 8 cannot be opened.

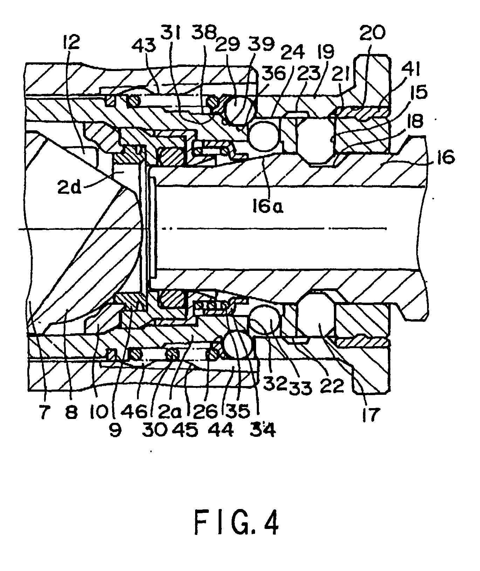

If the plug connecting sleeve 19 advances in the aforesaid manner, the first lock balls 29 that are in engagement with the notches 28 at the rear end of the plug connecting sleeve 19 are urged by the spring 30 to advance together with the plug connecting sleeve 19. Then, they are fitted individually into fitting recesses 36 in the outer peripheral surface of the small-outside-diameter cylinder portion 2a, and move to the centripetal direction. As this is done, the engaging projections 40 of the small-outside-diameter cylinder portion 2a are disengaged from the engaging grooves 25, whereupon the plug connecting sleeve 19 is allowed to rotate in the circumferential direction (FIG. 4).

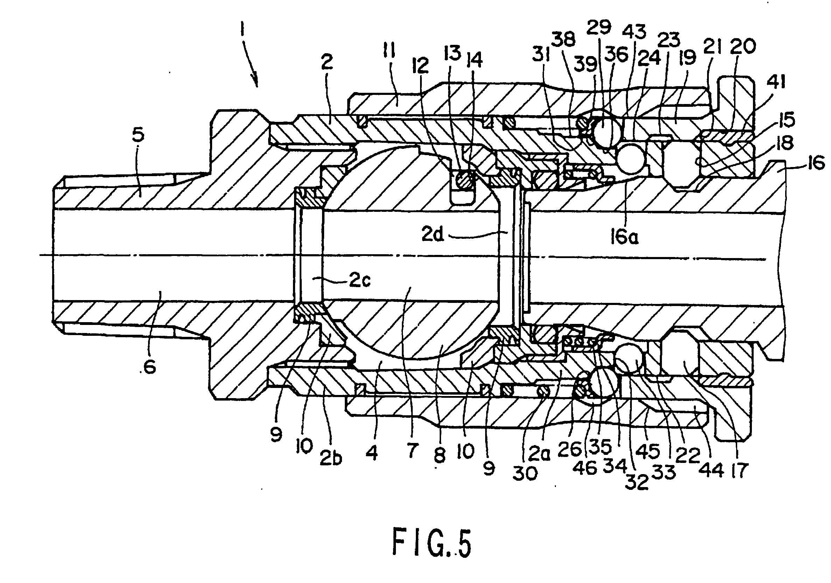

If the valve control sleeve 11 is advanced in this state, the convex portion 43 on the inner peripheral surface of the valve control sleeve 11 passes over the first lock balls 29, since the first lock balls 29 are fitted in the fitting recesses 36 and situated on the centripetal side. Thus, the valve control sleeve 11 reaches the advanced position, whereupon the ball valve 8 opens. At this point of time, the first lock balls 29 are situated corresponding to the first lock ball engaging groove 46 that is formed in the inner peripheral surface of the valve control sleeve 11 (FIG. 5).

If the plug connecting sleeve 19 in this state is rotated in the circumferential direction, the first lock balls 29 rotate in the same direction, get out of the fitting recesses 36, and run on to the outer peripheral surface of the small-outside-diameter cylinder portion 2a. Thus, they move to the centrifugal direction and engage the first lock ball engaging groove 46 of the valve control sleeve 11. Further, the engaging projections 40 that are disengaged from the engaging grooves 25 as the plug connecting sleeve 19 advances engage the step portions 26 behind the projections 24.

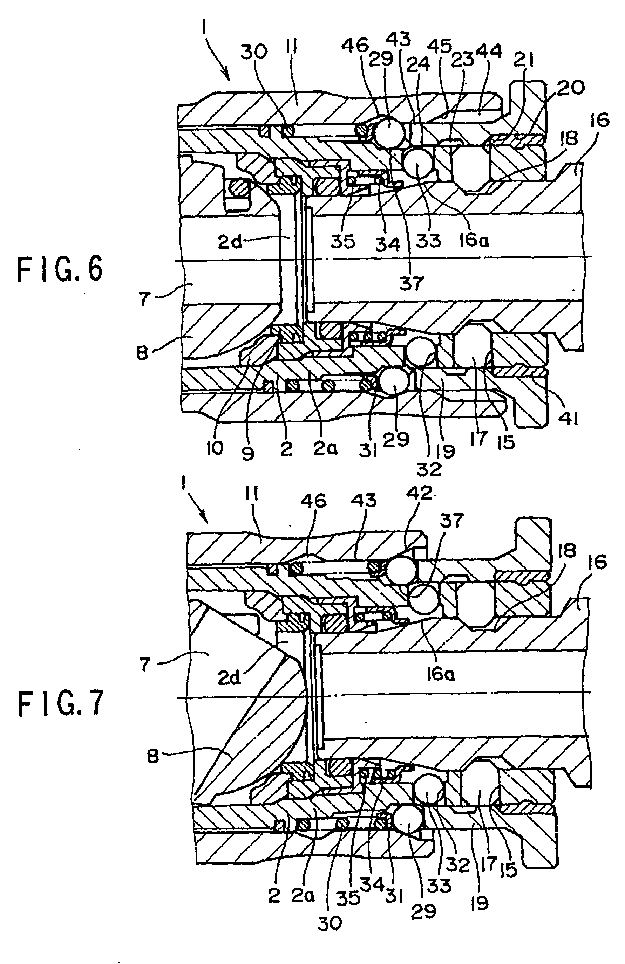

Thus, the plug connecting sleeve 19 is prevented from retreating by the engaging projections 40 that engage the step portions 26 behind the projections 24. The valve control sleeve 11 is locked together with the plug connecting sleeve 19 and prevented from retreating by the first lock balls 29 that engage the first lock ball engaging groove 46. The plug connecting sleeve 19 in the locked state can be held lest it be easily rotatable by causing the first lock balls 29 to engage the shallow retaining recesses 37 (FIG. 6).

In closing the ball valve 8 in this state, the plug connecting sleeve 19 is rotated to cause the first lock balls 29 to be fitted in the fitting recesses 36. Thereupon, the aforesaid locked state is canceled, and the ball valve 8 can be closed by retreating the valve control sleeve 11 (state of FIG. 4).

If the plug connecting sleeve 19 in this state is rotated in the circumferential direction, the first lock balls 29 rotate in the same direction and leave the fitting recesses 36. Then, they move to the centrifugal direction and engage the shallow retaining recesses 37 and the first retaining step portions 42 of the valve control sleeve 11.

Thereupon, the plug connecting sleeve 19 is prevented again from retreating, and the valve control sleeve 11 is prevented from advancing by the first lock balls 29 that engage the first retaining step portions 42 (FIG. 7).

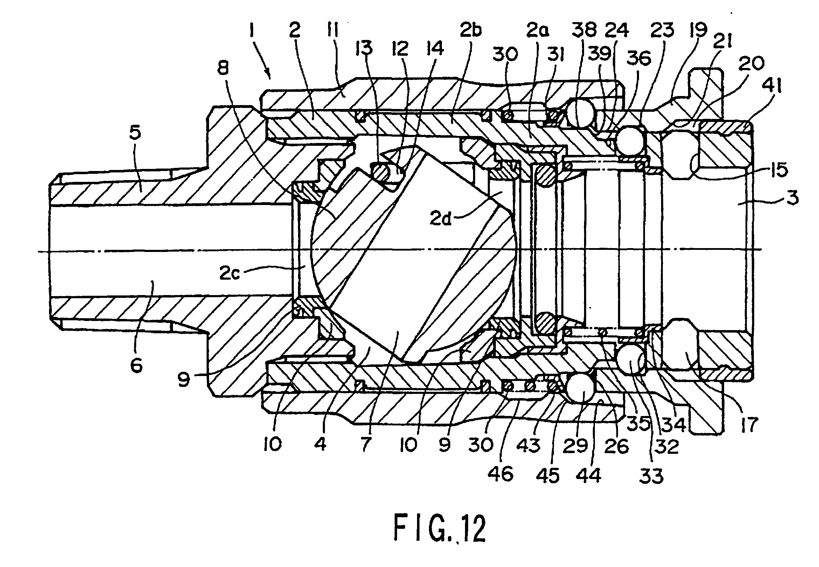

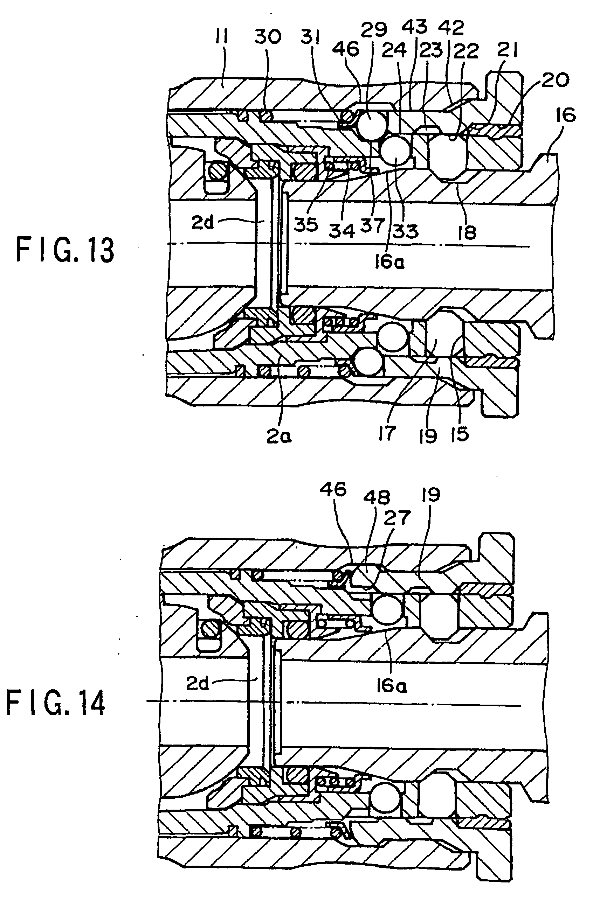

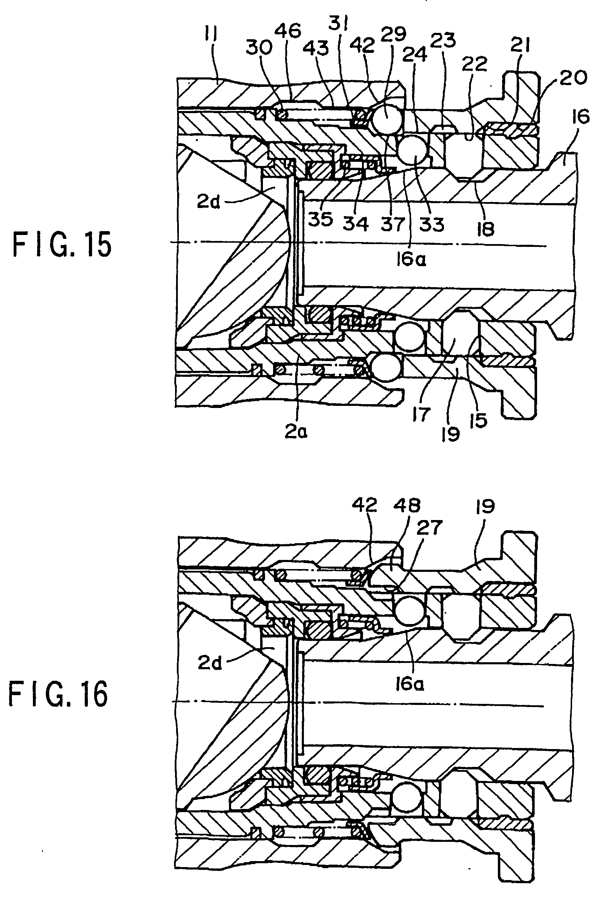

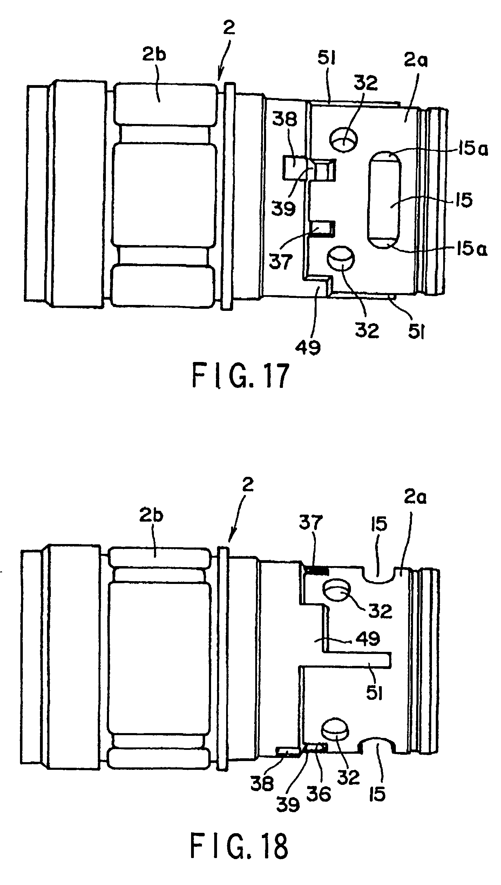

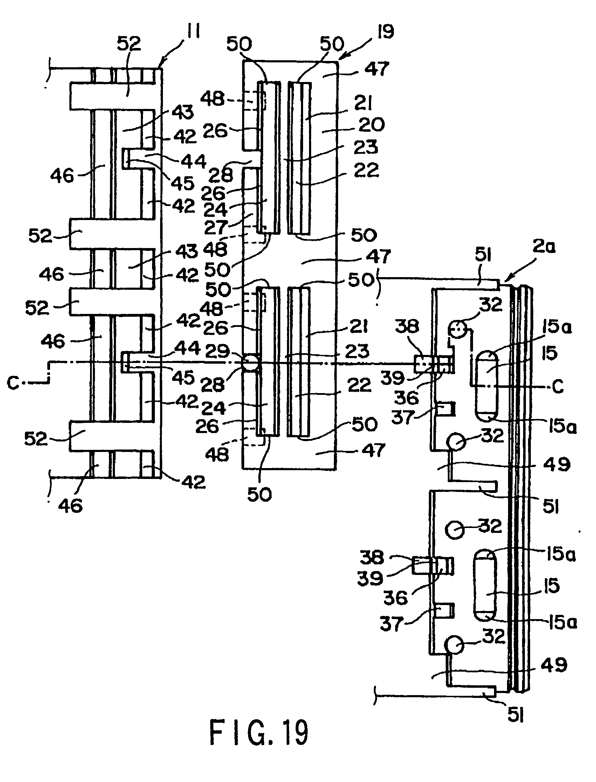

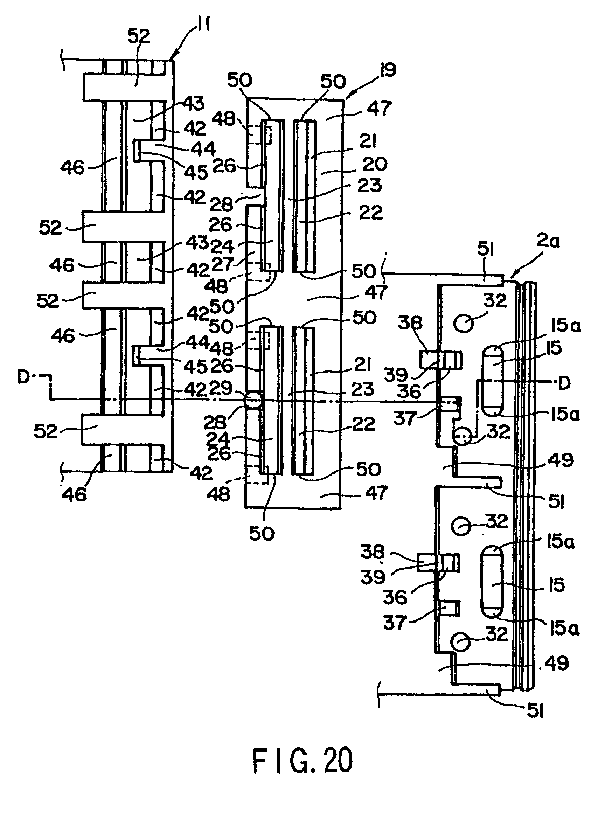

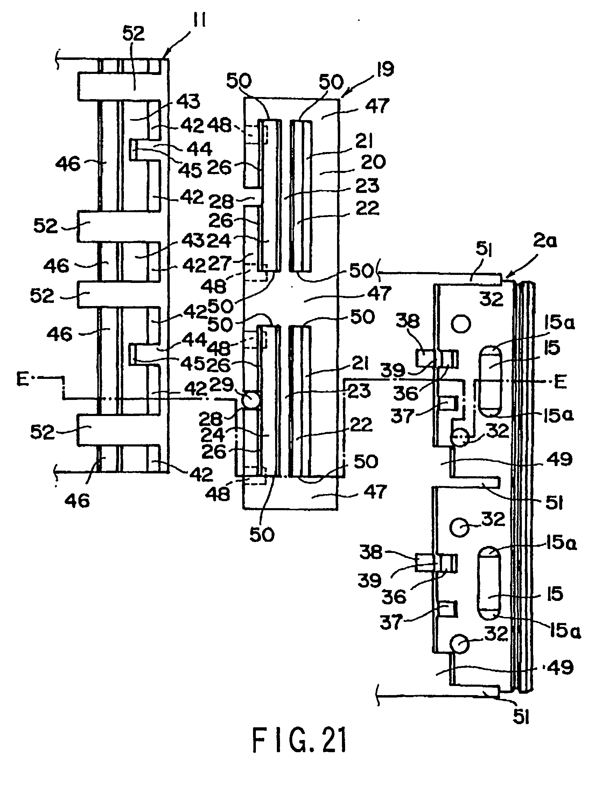

A second embodiment of the pipe coupling socket according to the present invention will now be described with reference to FIGS. 12 to 21. In the description of the present embodiment, like numerals are used to designate like portions that are shared with the first embodiment, and a description of those portions is omitted. The following is a description of different portions.

In the present embodiment, plug lock projections 22 on the inner peripheral surface of a plug connecting sleeve 19 and projections 24 located behind them are formed having engaging grooves 47 that regulate the rotation of the plug connecting sleeve 19. Further, a plurality of engaging protrusions 48 are arranged in the circumferential direction on the outer peripheral surface of the rear end of the plug connecting sleeve 19.

Further, engaging step portions 49 and rotation regulating step portions 51 are formed on the outer periphery of a small-outside-diameter cylinder portion 2a. Each engaging step portion 49 has a width substantially equal to the groove width of each engaging groove 47. When the plug connecting sleeve 19 is in its retreated position, the engaging step portions 49 individually engage the engaging grooves 47, thereby preventing the rotation of the plug connecting sleeve 19 in the circumferential direction and allowing the it to rotate in the axial direction only. When the plug connecting sleeve 19 is in its advanced position, the engaging step portions 49 are disengaged from the engaging grooves 47 and engage step portions 26 behind the projections 24, thereby preventing the retreat of the plug connecting sleeve 19 and allowing its rotation in the circumferential direction. The rotation regulating step portions 51 extend individually from the engaging step portions 49. When the plug connecting sleeve 19 is in the advanced position, the rotation regulating step portions 51 are situated individually in the engaging grooves 47, and engage sidewalls 50 of the engaging grooves 47 of the rotating plug connecting sleeve 19, thereby regulating the extent of its rotation.

If each rotation regulating step portion 51 engages one of the sidewalls 50, first lock balls 29 are fitted into the fitting recesses 36, individually. If each rotation regulating step portion 51 engages the other sidewall 50, the first lock balls 29 engage retaining recesses 37, individually.

Further, a valve control sleeve 11 has a convex portion 43 that extends in its circumferential direction on its distal end side. The convex portion 43 has tapered first retaining step portions 42. The first retaining step portions 42 are engaged by the first lock balls 29 and the engaging protrusions 48 that are arranged on the outer peripheral surface of the plug connecting sleeve 19 when the first lock balls 29 are disengaged from the fitting recesses 36 and situated on the centrifugal side with the plug connecting sleeve 19 in the advanced position.

The convex portion 43 is formed having slots 44, and besides, axially extending engaging slots 52 in which the engaging protrusions 48 are fitted. The engaging slots 52 communicate with a first lock ball engaging groove 46 that is formed in the inner peripheral surface of the valve control sleeve 11. If the plug connecting sleeve 19 in the advanced position is rotated, the engaging protrusions 48 moving in the inner parts of the engaging slots 52 transfer from the engaging slots 52 to the first lock ball engaging groove 46. Then, the engaging protrusions 48, along with the first lock balls 29, are fitted in the first lock ball engaging groove 46. The engaging slots 52 have the same function as the grooves 46a of the first embodiment.

The pipe coupling socket 1 of the second embodiment thus arranged and the plug 16 are connected to each other in the same manner as in the first embodiment.

### Industrial Applicability

As is evident from the above description, the pipe coupling socket of the present invention is provided with the lock means that prevents the advance and retreat of the valve control sleeve and the plug connecting sleeve. If the valve connection is partial, the advance of the plug connecting sleeve is prevented so that the valve cannot be opened by means of the valve control sleeve. Thus, the safety of the operation can be improved. Since the seal valve-seats can be prevented from being pressed to the ball valve under the fluid pressure, moreover, the durability of the annular rubber seal valve-seats and the perfection of the sealing can be ensured.

Although the present invention has been described in connection with the preferred embodiments with reference to the several drawings, it is to be understood that other similar embodiments may be used to fulfill the same functions of the invention or the aforementioned embodiments may be changed or supplemented without departing from the invention. Thus, the present invention should not be limited to any single embodiment, and it should be construed within the range or scope as defined by the appended claims.

## Claims

1. A pipe coupling socket (1) having a piping junction (5) at one end thereof and a plug inlet (3) at the other end, in which a piping passage (6) and the plug inlet (3) are internally connected by means of a through passage (7) of a built-in ball valve (8), comprising:
a socket body (2) having therein a valve chamber (4), one end of which communicates with the piping passage (6) and the other end of which communicates with the plug inlet (3), the ball valve (8) located for rotation in the valve chamber (4), and a valve control sleeve (11) which is fitted on the outer periphery of the socket body (2) and which advances to open the ball valve (8) and retreats to close the ball valve (8);
a locking element (17) which is supported on the distal end portion of the socket body (2) for movement in the centripetal and centrifugal directions and engages an engaging groove (18) formed on the outer periphery of a plug (16) inserted in the plug inlet (3), thereby locking the plug (16);
a plug connecting sleeve (19) which is fitted on the distal-side outer periphery of the socket body (2) and which advances to move the locking element (17) to the centripetal direction, thereby locking the plug (16), and retreats to allow the locking element (17) to move to the centrifugal direction, thereby unlocking the plug (16);
first lock balls (29) which are in engagement with the notches (28) formed at given spaces in the circumferential direction at the rear end of the plug connecting sleeve (19) for movement in the centripetal and centrifugal directions, move back and forth as the plug connecting sleeve (19) moves back and forth, and move in the circumferential direction with rotation; and
fitting recesses (36) which are formed_circumferentially in the outer peripheral surface of the socket body (2), fitted with the first lock balls(29) of the plug connecting sleeve (19) in the advanced position and have a depth for movement to the centripetal direction, the first lock balls (29) being situated on the centripetal side when the first lock balls (29) are fitted in the fitting recesses(36), the first lock balls(29) being situated on the centrifugal side when the plug connecting sleeve (19) is in the retreated position and when the plug connecting sleeve (19) is situated in the advanced position and rotated so that the first lock balls (29) are disengaged from the fitting recesses (36);
the inner peripheral surface of the valve control sleeve (11) having:
first retaining step portions (42) which engage the first lock balls_(29) when the first lock balls (29) are on the centrifugal side with the plug connecting sleeve (19) in the advanced position;
second retaining step portions (45) to which the first lock balls (29) are anchored when the plug connecting sleeve (19) is in the retreated position: and
a first lock ball engaging groove (46) which is engaged by the first lock balls (29) when the plug connecting sleeve (19) is in an advanced position and the first lock balls (29) are on the centrifugal side;
the first lock balls (29) on the centrifugal side and the second retaining step portions (45) constituting first lock means which prevents the valve control sleeve (11) from advancing when the plug connecting sleeve (19) is situated in a retreated position; and
the first lock balls (29) on the centrifugal side and the first retaining step portions (42) constituting second lock means which prevents the retreat of the plug connecting sleeve (19) and the advance of the valve control sleeve (11) when the plug connecting sleeve (19) and the valve control sleeve (11) are situated in an advanced position and a retreated position, respectively, and
the first lock balls (29) on the centrifugal side and the first lock- ball engaging groove (46) constituting third lock means which prevents the retreat of the plug connecting sleeve (19) and the valve control sleeve (11) when the plug connecting sleeve (19) and the valve control sleeve (11) are situated in their respective advanced positions.

2. A pipe coupling socket according to claim 1, **characterized in that** the plug connecting sleeve (19) is prevented from rotating in the circumferential direction and allowed to advance when in the retreated position, and is allowed to rotate in the circumferential direction to be prevented from retreating when in the advanced position, the inner peripheral surface of the valve control sleeve (11) has, on the distal end side thereof, a convex portion (43) which extends in the circumferential direction and has the first retaining step portions (42) the convex portion (43) is formed having moving grooves (44) in positions corresponding to the fitting recesses (36) in the outer peripheral surface of the socket body (2), depending on the distance covered by the movement of the plug connecting sleeve (19), the first lock balls (29) in the centrifugal side being movable in the moving grooves (44), the moving grooves (44) having, at the bottom thereof, the second retaining step portions (45) and the effect of locking by the first, second, and third lock means is removed when the first lock balls (29) are fitted in the fitting recesses (36) in the outer peripheral surface of the socket body (2) and situated on the centripetal side.

3. A pipe coupling socket according to claim 1 or 2, **characterized in that** the distal end portion of the socket body (2) is fitted with a plurality of second lock balls (39) which are arranged in the circumferential direction behind the locking element (17) for movement in the centripetal and centrifugal directions, the socket body (2) is fitted with a first collar (34) for movement, the first collar (34) in an advanced position supporting and situating the second lock balls (33) on the centrifugal side in a manner such that a part of each second lock ball (33) projects from the outer peripheral surface of the socket body (2) and retreating to release the second lock balls (33) from the support, thereby allowing the second lock balls (33) to sink into the socket body (2), the first collar (34) being urged in the advancing direction by means of a spring (30) so that the first collar (34) retreats as a plug (16) is inserted therein; the plug connecting sleeve (19) as, on the distal end side of the inner peripheral surface thereof, a plug unlocking recess (20) which extends in the circumferential direction and allows the locking element (17) to move to the centrifugal direction, the plug unlocking recess (20) being followed in the circumferential direction by a taper step portion (21), which presses and moves the locking element (17) to the centripetal direction, and a plug lock projection (22), which holds down moved to the centripetal direction, the plug lock projection being followed in the circumferential direction by a second lock ball engaging groove (23) in which the second lock balls (33) are fitted; the plug unlocking recess (20) is situated in the position of the locking element (17) and is allowed to move to the centrifugal direction of the locking element (17) when the second lock balls (33) are on the centrifugal side with the plug connecting sleeve (19) in the retreated position, the second lock balls (33) engaging the second lock ball engaging groove (23), thereby preventing the advance of the plug connecting sleeve (19); and the locking element (17) moved to the centrifugal direction in the process of plug insertion engages a step portion (21) at the bottom of the plug unlocking recess (20) of the plug connecting sleeve (19) so that the plug connecting sleeve (19) can advance when the first collar (34) retreats to allow the second lock balls (33) to move to the centripetal direction and be disengaged from the second lock ball engaging groove (23) as the plug (16) is inserted further.

4. A pipe coupling socket according to anyone of claims 1 to 3, **characterized in that** the respective openings of the piping passage (6) of the piping junction (5) and the plug inlet (3), which open on the valve chamber (4) side of the socket body (2), are provided individually with annular rubber seal valve-seats (9) which coaxially face each other across the through passage (7) of the ball valve (8) in an open position and are elastically pressed to the outer peripheral wall of the ball valve (8), the openings being further provided individually with stoppers (10) which prevent the annular rubber seal valve-seats (9) from being pressed to the ball valve (8) under an internal fluid pressure.

## Patentansprüche

1. Rohrverbindungsmuffe (1) mit einem Rohrabzweig (5) an deren einem Ende und einem Rohrverschlusseinlass (3) an deren anderem Ende, in welcher ein Rohrdurchlass (6) und der Rohrverschlusseinlass (3) über einen Durchgangslauf (7) in einem eingebauten Kugelventil (8) im Innern verbunden sind, umfassend:
einen Rohrstutzenkörper (2), worin sich eine Ventilkammer (4) befindet, bei der ein Ende mit dem Rohrdurchlass (6) in Verbindung steht und deren anderes Ende mit dem Rohrverschlusseinlass (3) kommuniziert, wobei das Kugelventil (8) zum Rotieren in der Ventilkammer (4) angeordnet ist, und
einen Ventilsteuerungsarm (11), der auf dem Außenumfang des Rohrstutzenkörpers (2) eingepasst ist, der sich vorschiebt, um das Kugelventil (8) zu öffnen, und der sich zurückzieht, um das Kugelventil (8) zu schließen;
ein Arretierelement (17), das am distalen Endabschnitt des Rohrstutzenkörpers (2) zum Bewegen in die zentripetalen und zentrifugalen Richtungen unterstützt wird und in die Eingriffsausnehmung (18) eingreift, die auf dem Außenumfang eines Verschlussstücks (16) ausgebildet ist, das in den Rohrverschlusseinlass (3) eingeführt wurde, wodurch das Verschlussstück (16) arretiert wird,
eine Verschlussstück-Verbindungsmuffe (19), die auf dem distalen Außenumfang des Rohrstutzenkörpers (2) eingepasst ist, und die sich vorschiebt, um das Arretierelement (17) in zentripetaler Richtung zu bewegen, wodurch das Verschlussstück (16) arretiert wird, und die sich zurückzieht, um zu ermöglichen, dass sich das Arretierelement (17) in die zentrifugale Richtung bewegt, wodurch die Arretierung des Verschlussstücks (16) aufgehoben wird;
mit ersten Arretierkugeln (29), die mit den Arretierkerben (28) in Eingriff sind, welche auf den vorhandenen Zwischenräumen in kreisrunder Richtung am hinteren Ende der Verschlussstück-Verbindungsmuffe (19) ausgebildet sind, um sich in die zentripetale und die zentrifugale Richtung zu bewegen, um sich vorwärts- und zurückzuschieben, so wie sich die Verschlussstück-Verbindungsmuffe (19) bewegt, und um sich mit einer Rotation in kreisrunder Richtung zu bewegen; und
mit Passsitz-Vertiefungen (36), die in der Außenumfangsfläche des Rohrstutzenkörpers (2) ausgebildet sind, in welche in der Vorschubstellung die ersten Arretierkugeln (29) der Verschlussstück-Verbindungsmuffe (19) eingepasst werden, und die eine Tiefe zum Antrieb in die zentripetale Richtung aufweisen, wobei sich die ersten Arretierkugeln (29) auf der zentripetalen Seite befinden, wenn die ersten Arretierkugeln (29) in die Passsitz-Vertiefungen (36) eingepasst worden sind, wobei sich die ersten Arretierkugeln (29) auf der Zentrifugalseite befinden, wenn sich die Verschlussstück-Verbindungsmuffe (19) in der Rückzugsstellung befindet, und wenn sich die Verschlussstück-Verbindungsmuffe (19) in der Vorschubstellung befindet und rotiert, so dass die ersten Arretierkugeln (29) aus den Passsitz-Vertiefungen (36) losgelöst werden;
in welcher die innere Umfangsfläche des Ventilsteuerungsarms (11) umfasst:
erste Haltestufenabschnitte (42), welche die ersten Arretierkugeln (29) einrasten lassen, wenn die ersten Arretierkugeln (29) auf der Zentrifugalseite mit der Verschlussstück-Verbindungsmuffe (19) in der Vorschubstellung sind;
zweite Haltestufenabschnitte (45), in welchen die ersten Arretierkugeln (29) verankert werden, wenn sich die Verschlussstück-Verbindungsmuffe (19) in der Rückzugsstellung befindet; und
eine erste Arretierkugel-Eingriffskerbe (46), welche mit den ersten Arretierkugeln (29) in Eingriff steht, wenn sich die Verschlussstück-Verbindungsmuffe (19) in einer Vorschubstellung befindet und die ersten Arretierkugeln (29) auf der Zentrifugalseite sind;
wobei die ersten Arretierkugeln (29) auf der Zentrifugalseite und die zweiten Haltestufenabschnitte (45) eine erste Arretiereinrichtung bilden, welche verhindert, dass sich der Ventilsteuerarm (11) vorschiebt, wenn sich die Verschlussstück-Verbindungsmuffe (19) in einer Rückzugsstellung befindet; und
wobei die ersten Arretierkugeln (29) auf der Zentrifugalseite und die ersten Haltestufenabschnitte (42) eine zweite Arretiereinrichtung bilden, welche den Rückzug der Verschlussstück-Verbindungsmuffe (19) und den Vorschub des Ventilsteuerarms (11) verhindert, wenn sich die Verschlussstück-Verbindungsmuffe (19) und der Ventilsteuerarm (11) in einer Vorschubstellung bzw. in einer Rückzugsstellung befinden, und
wobei die ersten Arretierkugeln (29) auf der Zentrifugalseite und die erste Arretierkugel-Eingriffskerbe (46) eine dritte Arretiereinrichtung bilden, welche den Rückzug der Verschlussstück-Verbindungsmuffe (19) und den Vorschub des Ventilsteuerarms (11) verhindert, wenn sich die Verschlussstück-Verbindungsmuffe (19) und der Ventilsteuerarm (11) in deren jeweiligen Vorschubstellungen befinden.

2. Rohrverbindungsmuffe gemäß Anspruch 1, **dadurch gekennzeichnet, dass** die Verschlussstück-Verbindungsmuffe (19) am Rotieren in die Rohrumfangsrichtung gehindert wird, und dass ein Vorschub ermöglicht wird, wenn sie sich in der Rückzugsstellung befindet, und dass sie sich in die Umfangsrichtung drehen kann, damit ein Rückzug verhindert wird, wenn sie sich in der Vorschubstellung befindet,
wobei die innere Umfangsfläche des Ventilsteuerarms (11) - auf dessen distalem Ende - einen Konvexabschnitt (43) aufweist, der sich in die Umfangsrichtung erstreckt, und die ersten Haltestufenabschnitte (42) umfasst,
wobei der Konvexabschnitt (43) so ausgebildet ist, dass er Gleitkerben (44) in den Positionen aufweist, die mit den Passsitz-Vertiefungen (36) in der Außenumfangsfläche des Rohrstutzenkörpers (2) übereinstimmen, was von der Distanz abhängig ist, die von dem Antriebsmechanismus der Verschlussstück-Verbindungsmuffe (19) zurückgelegt wird,
wobei die ersten Arretierkugeln (29) innerhalb der Zentrifugalseite in die Gleitkerben (44) bewegt werden können,
wobei die Gleitkerben (44) - an deren Unterseite - die zweiten Haltestufenabschnitte (45) aufweisen, und
wobei der Arretiereffekt mit der ersten, zweiten und dritten Arretiereinrichtung beseitigt wird, wenn die ersten Arretierkugeln (29) in den Passsitz-Vertiefungen (36) auf der Außenumfangsfläche des Rohrstutzenkörpers (2) eingepasst sind und sie sich auf der Zentripetalseite befinden.

3. Rohrverbindungsmuffe gemäß Anspruch 1 oder 2, **dadurch gekennzeichnet, dass** der distale Endabschnitt des Rohrstutzenkörpers (2) mit einer Vielzahl von zweiten Arretierkugeln (33) eingepasst wird, die in Umfangsrichtung hinter dem Arretierelement (17) zum Antrieb in zentripetaler und zentrifugaler Richtung angeordnet sind,
wobei der Rohrstutzenkörper (2) mit einer ersten Manschette (34) für den Antrieb ausgerüstet ist,
wobei die erste Manschette (34) in einer vorgeschobenen Stellung die zweiten Arretierkugeln (33) auf der Zentrifugalseite in einer Weise unterstützt und so lokalisiert, dass ein Teil von jeder zweiten Arretierkugel (33) von der Außenumfangsfläche des Rohrstutzenkörpers (2) hervorsteht und sich dann zurückzieht, um die zweiten Arretierkugeln (33) aus dem Träger freizugeben, wodurch ermöglicht wird, dass die zweiten Arretierkugeln (33) in den Rohrstutzenkörper (2) versenkt werden,
wobei die erste Manschette (34) mithilfe einer Feder (30) in die Vorschubrichtung angetrieben wird, so dass sich die erste Manschette (34) zurückzieht, da ein Verschlussstück (16) eingeführt werden soll;
in welcher die Verschlussstück-Verbindungsmuffe (19) - auf dem distalen Ende von dessen innerer Umfangsfläche - eine Verschlussstück-Entriegelungskerbe (20) aufweist, welche sich umfangsseitig erstreckt und ermöglicht, dass sich das Arretierelement (17) in die zentrifugale Richtung bewegt,
wobei die Verschlussstück-Entriegelungskerbe (20) von einem konischen Stufenabschnitt (21) umfangsseitig begleitet wird, welcher das Arretierelement (17) in die zentripetale Richtung presst und befördert, und
einen Verschlussstück-Arretiervorsprung (22) umfasst, welcher in die zentripetale Richtung während der Bewegung nach unten festhält, wobei der Verschlussstück-Arretiervorsprung (22) von einer zweiten Arretierkugel-Eingriffskerbe (23) umfangsseitig begleitet wird, in welche die zweiten Arretierkugeln (33) eingepasst worden sind;
wobei die Verschlussstück-Entriegelungskerbe (20) in die Stellung des Arretierelements (17) gebracht und ermöglicht wird, dass sie sich in die zentrifugale Richtung des Arretierelements (17) bewegen kann, wenn sich die zweiten Arretierkugeln (33) auf der Zentrifugalseite mit der Verschlussstück-Verbindungsmuffe (19) in der Rückzugsstellung befinden,
wobei die zweiten Arretierkugeln (33) mit der zweiten Arretierkugel-Eingriffskerbe (23) in Eingriff gelangen, wodurch der Vorschub der Verschlussstück-Verbindungsmuffe (19) verhindert wird; und
wobei das Arretierelement (17), das sich während des Prozesses der Verschlussstückeinführung in die zentrifugale Richtung bewegt hat, in einem Stufenabschnitt (21) auf der Unterseite der Verschlussstück-Entriegelungskerbe (20) in der Verschlussstück-Verbindungsmuffe (19) in Eingriff kommt, so dass sich die Verschlussstück-Verbindungsmuffe (19) vorschieben kann, wenn sich die erste Manschette (34) zurückzieht, um zu ermöglichen, dass sich die zweiten Arretierkugeln (33) in die zentripetale Richtung bewegen und aus der zweiten Arretierkugel-Eingriffskerbe (23) losgelöst werden, da das Verschlussstück (16) weiter eingeführt werden soll.

4. Rohrverbindungsmuffe gemäß einem beliebigen der Ansprüche 1 bis 3, **dadurch gekennzeichnet, dass** die jeweiligen Öffnungen des Rohrdurchlasses (6) in dem Rohrabzweig (5) und in dem Rohrverschlusseinlass (3), welche seitlich der Ventilkammer (4) in dem Rohrstutzenkörper (2) zu öffnen sind, jeder für sich mit ringförmigen Gummidichtungsventilsitzen (9) bereitgestellt wird, welche gegenüberliegend in dem Rohrdurchlass (7) des Kugelventils (8) in einer geöffneten Stellung koaxial zueinander angeordnet werden, und welche gegen die Außenumfangswand des Kugelventils (8) elastisch gepresst werden, wobei des Weiteren die einzelnen Öffnungen mit Anschlagstoppern (10) vorgesehen sind, welche verhindern, dass die ringförmigen Gummidichtungsventilsitze (9) unter dem Einfluss eines internen Flüssigkeitsdrucks in das Kugelventil (8) zusammengepresst werden können.

## Revendications

1. Tubulure de raccord (1) ayant une jonction de tuyaux (5) au niveau d'une extrémité et une entrée de bouchon (3) au niveau de l'autre extrémité, dans laquelle un passage de tuyaux (6) et l'entrée de bouchon (3) sont connectés en interne au moyen d'un passage débouchant (7) d'un robinet à boisseau sphérique intégré (8) comprenant :
un corps de tubulure (2) ayant à l'intérieur une chambre de robinet (4), dont une extrémité communique avec le passage de tuyaux (6) et l'autre extrémité avec l'entrée de bouchon (3), le robinet à boisseau sphérique (8) étant logé en rotation dans la chambre de robinet (4) et un manchon de commande de robinet (11) qui est inséré sur la périphérie externe du corps de raccord (2) et qui avance pour ouvrir le robinet à boisseau sphérique (8) et recule pour fermer le robinet à boisseau sphérique (8) ;
un élément de verrouillage (17) qui est supporté sur la partie d'extrémité distale du corps de raccord (2) pour le mouvement dans les directions centripètes et centrifuges et engage une rainure d'engagement (18) formée sur la périphérie externe d'un bouchon (16) inséré dans l'entrée de bouchon (3), verrouillant par ce moyen le bouchon (16) ;
un manchon de connexion de bouchon (19) qui est inséré sur la périphérie externe côté distal du corps de raccord (2) et qui avance pour déplacer l'élément de verrouillage (17) en direction centripète, verrouillant par ce moyen le bouchon (16) et recule pour permettre à l'élément de verrouillage (17) de se déplacer en direction centrifuge, déverrouillant par ce moyen le bouchon (16) :
des premières billes de verrouillage (29) qui sont en engagement avec les entailles (28) formées sur des espaces donnés dans la direction circonférentielle au niveau de l'extrémité arrière du manchon de connexion de bouchon (19) pour le mouvement dans les directions centripètes et centrifuges, se déplacent en arrière et en avant lorsque le manchon de connexion de bouchon (19) se déplace en arrière et en avant, et se déplacent dans la direction circonférentielle avec rotation ; et
des évidements d'insertion (36) qui sont formés de manière circonférentielle dans la surface périphérique externe du corps de raccord (2), équipés des premières billes de verrouillage (29) du manchon de connexion de bouchon (19) dans la position avancée, et ont une profondeur pour le mouvement en direction centripète, les premières billes de verrouillage (29) étant situées sur le côté centripète lorsque les premières billes de verrouillage (29) sont insérées dans les évidements d'insertion (36), les premières billes de verrouillage (29) étant situées sur le côté centrifuge lorsque le manchon de connexion de bouchon (19) est dans la position reculée et lorsque le manchon de connexion de bouchon (19) est situé dans la position avancée et pivoté de sorte que les premières billes de verrouillage (29) soient désengagées des évidements d'insertion (36) ;
la surface périphérique interne du manchon de commande de robinet (11) présentant :
des premières parties de gradin de retenue (42) qui engagent les premières billes de verrouillage (29) lorsque les premières billes de verrouillage (29) sont sur le côté centrifuge avec le manchon de connexion de bouchon (19) dans la position avancée ;
des secondes parties de gradin de retenue (45), sur lesquelles sont ancrées les premières billes de verrouillage (29) lorsque le manchon de connexion de bouchon (19) est dans la position reculée ; et
une rainure d'engagement des premières billes de verrouillage (46) qui est engagée par les premières billes de verrouillage (29) lorsque le manchon de connexion de bouchon (19) est dans une position avancée et les premières billes de verrouillage (29) sont sur le côté centrifuge ;
les premières billes de verrouillage (29) sur le côté centrifuge et les secondes parties de gradin de retenue (45) constituant des premiers moyens de verrouillage qui évitent que le manchon de commande de robinet (11) n'avance lorsque le manchon de connexion de bouchon (19) est situé dans une position reculée ; et
les premières billes de verrouillage (29) sur le côté centrifuge et les premières parties de gradin de retenue (42) constituant des deuxièmes moyens de verrouillage qui évitent le recul du manchon de connexion de bouchon (19) et l'avance du manchon de commande de robinet (11) lorsque le manchon de connexion de bouchon (19) et le manchon de commande de robinet (11) sont respectivement situés dans une position avancée et une position reculée et
les premières billes de verrouillage (29) sur le côté centrifuge et la rainure d'engagement des premières billes de verrouillage (46) constituant des troisièmes moyens de verrouillage qui évitent le recul du manchon de connexion de bouchon (19) et du manchon de commande de robinet (11) lorsque le manchon de connexion de bouchon (19) et le manchon de commande de robinet (11) sont situés dans leurs positions avancées respectives.

2. Tubulure de raccord selon la revendication 1, **caractérisée en ce que** le manchon de connexion de bouchon (19) est empêché de tourner dans la direction circonférentielle et autorisé à avancer lorsqu'il est dans la position reculée, et est autorisé à tourner dans la direction circonférentielle pour l'empêcher de reculer lorsqu'il est dans la position avancée, la surface périphérique interne du manchon de commande de robinet (11) présente sur le côté d'extrémité distale une partie convexe (43) qui s'étend dans la direction circonférentielle et présente les premières parties de gradin de retenue (42), la partie convexe (43) est formée avec des rainures mobiles (44) dans des positions correspondant aux évidements d'insertion (36) dans la surface périphérique externe du corps de raccord (2) selon la distance couverte par le mouvement du manchon de connexion de bouchon (19), les premières billes de verrouillage (29) dans le côté centrifuge étant mobiles dans les rainures mobiles (44), les rainures mobiles (44) présentant sur leur fond les secondes parties de gradin de retenue (45) et l'effet de verrouillage par les premiers, deuxièmes et troisièmes moyens de verrouillage est éliminé lorsque les premières billes de verrouillage (29) sont insérées dans les évidements d'insertion (36) dans la surface périphérique externe du corps de raccord (2) et situées sur le côté centripète.

3. Tubulure de raccord selon la revendication 1 ou 2, **caractérisée en ce que** la partie d'extrémité distale du corps de raccord (2) est équipée d'une pluralité de secondes billes de verrouillage (33) qui sont disposées dans la direction circonférentielle derrière l'élément de verrouillage (17) pour le mouvement dans les directions centripètes et centrifuges, le corps de raccord (2) est équipé d'un premier collier (34) pour le mouvement, le premier collier (34) dans une position avancée supportant et situant les secondes billes de verrouillage (33) sur le côté centrifuge d'une manière telle qu'une partie de chaque seconde bille de verrouillage (33) fait saillie de la surface périphérique externe du corps de raccord (2) et reculant pour libérer les secondes billes de verrouillage (33) du support, permettant par ce moyen aux secondes billes de verrouillage (33) de s'enfoncer dans le corps de raccord (2), le premier collier (34) étant poussé dans la direction d'avance au moyen d'un ressort (30) de sorte que le premier collier (34) recule lorsqu'un bouchon (16) est inséré dedans ; le manchon de connexion de bouchon (19) présente sur le côté d'extrémité distale de la surface périphérique interne un évidement de déverrouillage de bouchon (20) qui s'étend dans la direction circonférentielle et permet à l'élément de verrouillage (17) de se déplacer en direction centrifuge, l'évidement de déverrouillage de bouchon (20) étant suivi dans la direction circonférentielle par une partie de gradin conique (21) qui presse et déplace l'élément de verrouillage (17) en direction centripète et une saillie de verrouillage de bouchon (22) qui verrouille, déplacée en direction centripète, la saillie de verrouillage de bouchon étant suivie dans la direction circonférentielle par une rainure d'engagement des secondes billes de verrouillage (23), dans laquelle les secondes billes de verrouillage (33) sont insérées ; l'évidement de déverrouillage de bouchon (20) est situé dans la position de l'élément de verrouillage (17) et est autorisé à se déplacer en direction centrifuge de l'élément de verrouillage (17) lorsque les secondes billes de verrouillage (33) sont sur le côté centrifuge avec le manchon de connexion de bouchon (19) dans la position reculée, les secondes billes de verrouillage (33) engageant la rainure d'engagement des secondes billes de verrouillage (23), empêchant par ce moyen l'avance du manchon de connexion de bouchon (19) ; et l'élément de verrouillage (17) déplacé en direction centrifuge dans le processus d'insertion de bouchon engage une partie de gradin (21) sur le fond de l'évidement de déverrouillage du bouchon (20) du manchon de connexion de bouchon (19) de sorte que le manchon de connexion de bouchon (19) puisse avancer lorsque le premier collier (34) recule pour permettre aux secondes billes de verrouillage (33) de se déplacer en direction centripète et d'être désengagées de la rainure engageant les secondes billes de verrouillage (23) lorsque le bouchon (16) est inséré plus loin.

4. Tubulure de raccord selon l'une quelconque des revendications 1 à 3, **caractérisée en ce que** les ouvertures respectives du passage de tuyaux (6) de la jonction de tuyaux (5) et de l'entrée de bouchon (3) qui ouvrent sur le côté de chambre de robinet (4) du corps de raccord (2), sont équipées individuellement de sièges de robinet étanches, en caoutchouc, annulaires (9) qui se font face coaxialement au travers du passage débouchant (7) du robinet à boisseau sphérique (8) dans une position ouverte et sont élastiquement pressées vers la paroi périphérique externe du robinet à boisseau sphérique (8), les ouvertures étant équipées en outre individuellement d'obturateurs (10) qui empêchent que les sièges de robinet étanches, en caoutchouc, annulaires (9) soient pressés sur le robinet à boisseau sphérique (8) sous une pression fluidique interne.
